# EUROPEAN PATENT APPLICATION

(11) **EP 1 279 644 A2**
(43) Date of publication of application: **29.01.2003**
(21) Application number: 02015934.9
(22) Date of filing: 17.07.2002
(51) Int. Cl.: C03B 19/09

(54) **Method for producing a quartz glass crucible for pulling up silicon single crystal and apparatus**

(30) Priority: 23.07.2001 JP 2001221809
(71) Applicant: Heraeus Quarzglas GmbH & Co. KG, 63450 Hanau (DE); Shin-Etsu Quartz Products Co.,Ltd., Shinjuku-ku Tokyo 160-0023 (JP)
(72) Inventor: Watanabe, Hiroyuki, Koriyama-shi, Fukushima 963-0101 (JP)
(74) Representative: Staudt, Armin, Dipl.-Ing.

(57) **Abstract**

A method and an apparatus for producing a quartz glass crucible for pulling up a silicon single crystal capable of effectively reducing the content of bubbles by reducing the bubble diameters of the outer layer of the crucible are proposed. The method comprises the method step that during heat-melting of a porous outer molding a processing gas is supplied for flowing through the porous molding, whereby the processing gas preferably contains less nitrogen than air or less oxygen than air.

## Description

### Technical Field to which the Invention Belongs

The present invention relates to a method and an apparatus for producing a quartz glass crucible having a large bore diameter, which is used for pulling up a silicon single crystal.

### Related Art

Hitherto, for the production of a single crystal substance such as a single crystal semiconductor material, a method so-called Czochralski method has been widely used. In the method, polycrystalline silicon is melted in a vessel, the end portion of a seed crystal is immersed in the melt in the vessel and the seed crystal is pulled up while rotating, whereby a single crystal having a same crystal orientation is grown on the seed crystal. For the vessel of pulling up the single crystal, a quartz glass crucible is generally used.

In the recent increase of the demand for high-quality wafers, the convection control of a silicon molten liquid has become important. Particularly, when the diameter of the wafer is increased, by the control only of the positions of the carbon heaters as in prior art, the heat passing through a quarts crucible becomes hard to control, which is anticipated to give influences on the quality of single crystal.

As to the manner of conducting heat, heat is first conducted from the heated carbon heater to a carbon susceptor by radiation and then passing through a quartz crucible, is conducted to a silicon melt. Usually, the crucible is a double structure, and a bubble layer, which is the outer layer, is formed for making uniform the heat conducted. However, when the content of bubbles is too high and the diameters of the bubbles are too large, the heat-shielding effect becomes large.

As a technique of reducing the content of the bubbles of the outer layer of the crucible, by controlling the reduced pressure layer in a reduced pressure melting, the content of the bubbles can be controlled (Japanese Patent Laid-Open No. 149333/1981) and in addition to the above technique, there are known a technique of reducing bubbles by incorporating crystalline silica and non-crystalline silica in the case of forming the outer layer (Japanese Patent Laid-Open No. 72793/1994), a technique of reducing the sizes of bubbles by controlling the particle size distribution of powder (Japanese Patent Laid-Open No. 172978/1995). However, these techniques are insufficient for the method of effectively reducing the content of the bubbles of the outer layer of the crucible.

### Problems that the Invention is to Solve

The present invention has been base in view of the above-described problems, and an object of the invention is to provide a method and an apparatus for producing a quartz glass crucible for pulling up a single silicon crystal capable of effectively reducing the content of bubbles by reducing the diameters of the bubbles of the outer layer of the crucible.

### Means for Solving the Problems

For solving the above-described problems, the method for producing a quarts glass crucible for pulling up a silicon single crystal of the invention is a method for producing a quartz glass crucible for pulling up a silicon single crystal having a layer structure comprising a translucent outer layer containing many bubbles and a transparent inner layer, the method comprises
(a) providing a heat-resisting mold having an opening opened upwardly
(b) a step of supplying a silicon dioxide powder to the inside of the mold to form a porous molding along the inner surface of the mold,
(c) a step of heat-melting of the molding to form the translucent outer layer of the quartz glass crucible, whereby an inside surface of the molding is vitrified by melting which forms an inside quartz glass layer, and
(d) a step of supplying a silicon dioxide powder into a high-temperature gas atmosphere inside the mold and scattering the silicon dioxide powder toward an inner wall surface in order to form the transparent inner layer welded to the translucent outer layer,
wherein
(e) during heat-melting of the molding a processing gas is supplied for flowing through the porous molding.

As the processing gas supplied to the above-described molding, at least one kind of a gas is used which is able to diffuse out from glass better than air. The air containing in the pores of the porous molding is replaced by such a processing gas. Therefore the air content in the pores is decreased and in the following less or smaller bubbles are generated.

Preferably as the processing gas supplied to the above-described molding at least one kind of a gas is used, containing less nitrogen than air or less oxygen than air

The air containing in the pores of the porous molding is replaced by the processing gas containing less nitrogen. Therefore the nitrogen content in the pores is decreased. Since nitrogen is one of the reasons for the generating of the bubbles in the translucent outer layer, less or smaller bubbles are generated. Alternatively the processing gas supplied to the above-described molding, at least one kind of a gas is used, containing less oxygen than air. The air containing in the pores of the porous molding is replaced by the processing gas containing less oxygen. Therefore the oxygen content in the pores is decreased. Since oxygen is one of the reasons for the generating of the bubbles in the translucent outer layer, less or smaller bubbles are generated.

In a preferred embodiment a processing gas is used containing less nitrogen than air and less oxygen than air. The air containing in the pores of the porous molding is replaced by the processing gas containing less oxygen and simultaneously less nitrogen. Therefore the oxygen content and the nitrogen content in the pores is decreased. Since oxygen and nitrogen are some the reasons for the generating of the bubbles in the translucent outer layer, less or smaller bubbles are generated.

Preferably the processing gas is supplied to the outside of the porous molding. During melt heating the inside of the porous molding is densified. After densification there is no possibility for the processing gas to flow from the inside surface to the outside surface. Therefore, the processing gas is preferably supplied from the inside surface of the porous molding.

As the above-described processing gas, hydrogen, helium or a mixture gas thereof is suitably used. These processing gases have a low coefficient of diffusion in quartz glass and therefore, these gases are able to diffuse out of the quartz glass even after its densification. The generating of bubbles in the translucent outer layer is avoided or smaller bubbles are generated.

The apparatus for producing a quarts glass crucible for pulling up a silicon single crystal of the invention is an apparatus for producing a quartz glass crucible for pulling up a silicon single crystal, comprising of a horizontally rotatable heat-resisting mold equipped with an opening opened upward and a heating means for heating the inside of the heat-resisting mold, comprising at least one gas supply opening opened to the inside surface of the heat-resisting mold and a gas supply passage connected to the gas supply opening, and so constructed that after heat-melting a porous molding of a silicon dioxide powder formed along the inner surface of the heat-resisting mold and vitrifying the inside surface thereof to form a glass layer, a processing gas can be supplied to the inside of the molding through the gas supply passage and the gas supply opening.

In the production apparatus of the invention, it is preferred to form a plurality of gas supply openings by perforating the inside of the wall body of the heat-resisting mold.

It is furthermore preferred that at least one exhaust gas vent is provided which is connected to the inside surface of the heat-resisting mold. The exhaust gas vent may allow further bubbling of the processing gas even if the inner layer of the porous molding has been densified.

Preferably a plurality the exhaust gas vents are formed by perforating the inside of the wall body of the heat-resisting mold.

"Silicon dioxide powder" in the invention includes non-crystalline and crystalline silicon dioxide powders and also natural and synthetic silicon dioxide powders, and in the invention, the non-crystalline silicon dioxide powder is called "quarts glass powder" and the crystalline silicon dioxide powder is called "quarts powder". That is, for example, it is practical to use a natural quarts powder as the raw material power of the outer layer and it is practical to use a synthetic quartz glass powder as the raw material powder of the inner layer, but various kinds of powders such as a (crystalline) natural quartz powder, a natural quarts glass power, a (crystalline) synthetic quartz powder, a synthetic quarts glass powder, etc., and a mixture of various kinds of powders can be properly selected.

For example, since the natural quartz powder obtained by grinding and purifying natural rock crystal, silica sand, silica, etc., has the merit in the cost as well as the merit that (the quartz glass itself prepared) is excellent in the heat resistance, the powder is suitable as the raw material for the outer layer of the quarts glass crucible of the invention. Also, the synthetic quartz glass powder as a powder of a higher purity is suitable as the raw material of the inner layer of the crucible, and practically, the synthetic quartz glass powders obtained by a sol-gel method, a soot method, a flame burning method, etc., using silicon alkoxide, silicon halides (silicon tetrachloride, and the like), sodium silicate, etc., as the starting material can be suitably selected. Furthermore, in addition to the above-described powders, fumed silica, precipitated silica, etc., can be also utilized. Moreover, according to the desired properties (the state and density of bubbles, the surface state thereof, etc.) of the quartz glass crucible prepared, a crystallized synthetic quarts powder, a vitrified natural quarts glass powder, a mixture of the above-described various powders, a compound containing an element (an aluminum compound, etc.) contributing to the acceleration of the crystallization, the shield of entrance of impurities, etc., and a mixture of such powders can be also used as the raw materials of the inner and outer layers of the crucible.

### Mode for Carrying out the Invention

In the following a preferred mode for carrying out the invention is explained based on the accompanying drawings, but these explanations are shown as an illustration of the invention and the invention is not limited thereto.

### Brief Description of the Drawings

- **Figure 1**: is an explanatory schematic cross section view showing an apparatus, which is used for the practice of the invention, and a method for producing a quartz glass crucible using said apparatus.
- **Figure 2**: is a cross-sectional view showing a part of the flow of the processing gas during producing a quartz glass crucible for pulling up a silicon single crystal according to the present invention.

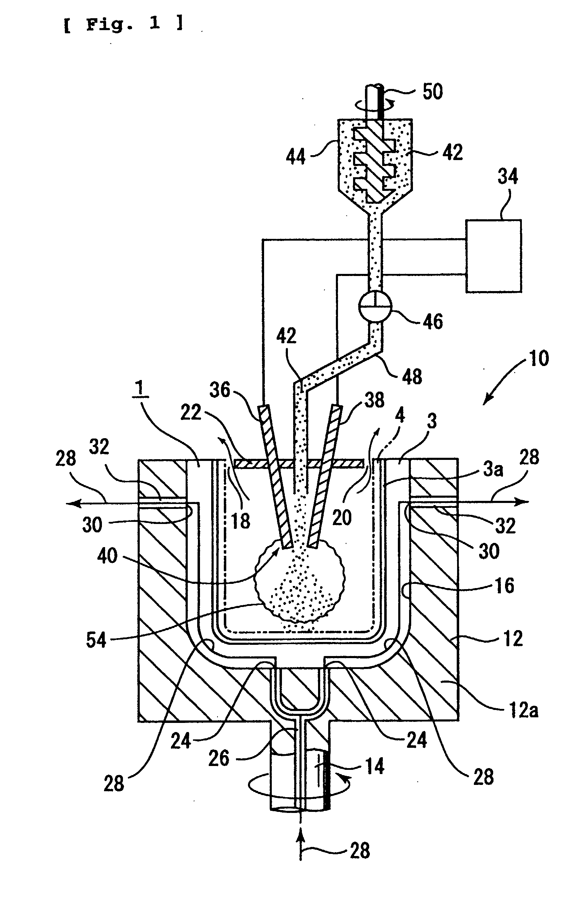

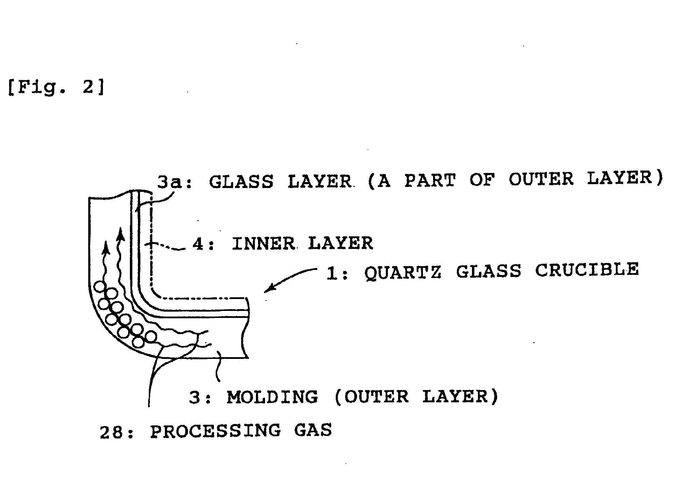

**Fig. 1** is a cross-sectional view showing the apparatus used for the practice of the method of the invention and explanatorily showing the production method of a quartz glass crucible using the apparatus. Fig. 2 is a cross-sectional view of a part showing the stream of a processing gas during the production of a quartz glass crucible for pulling up a silicon single crystal of the invention.

In Fig 1 the numeral 10 shows a production apparatus of a quarts glass crucible of the invention and has a heat-resisting mold 12. The heat-resisting mold 12 is horizontally rotatively supported by a rotary axis 14. The numeral 16 is a cavity formed at the inside of the heat-resisting mold 12 and equipped with an opening 18 opened upward. The opening 18 is covered by a lid 22 leaving a slit opening 20.

The numeral 24 is a gas supply opening opened to the inside surface, and preferably to the bottom inside surface of the heat-resisting mold 12, and one or plural gas supply openings are formed. The numeral 26 is a gas supply passage, which is connected to the gas supply opening 24 and formed by perforating the inside of a wall body 12a of the heat-resisting mold 12, and the other end is opened to the outside passing through, for example, in the illustrated figure, the inside of the rotary axis 14. Accordingly, a processing gas 28 supplied to the gas supply passage 26 from the outside is supplied from the gas supply opening 24 to the inside surface side of the heat-resisting mold 12, that is, the inside of the cavity 16.

The numeral 30 is an exhaust gas vent, is opened in the inside surface of the heat-resisting mold 12, and preferably to the upper end portion thereof, and one or plural exhaust gas vents are formed. The numeral 32 is an exhaust gas passage, which is connected to the exhaust gas vent 30 and is formed by perforating the inside of the wall body 12a the heat-sensitive mold 12, and other end thereof is opened to the outside, for example, in the illustrated figure, to the peripheral surface of the heat-resisting mold 12. Accordingly, the processing gas 28 supplied in the inside of the cavity 16 is exhausted to the outside of the heat-resisting mold 12 from the exhaust gas vent 30 and the exhaust gas passage 32.

As the heating means of heating the heat-resisting mold 12 from the inside surface side, as shown in Fig. 1, an arc discharging apparatus 40 equipped with carbon electrodes 36 and 38 each connected to a power source 34 can be used.

In place of the arc discharging apparatus 40, a plasma discharging apparatus may be used.

The numeral 1 is a quartz glass crucible of pulling up a silicon single crystal, which has a translucent quartz glass formed from a silicon dioxide powder such as, for example, a natural quarts powder, that is, a base body 3 constituting the outer layer. The base body 3 is produced by introducing a silicon dioxide powder in the rotating heat-resisting mold 12, accumulating in layer along the inside wall of the heat-resisting mold 12 to form a molding 3 having an almost desired crucible form, and after melting the silicon dioxide powder by heating the molding 3 from the inner surface, cooling the molding. About the production of the base body 3, there is a detailed description in Japanese Patent Publication No. 22861/1992.

In the method of the invention, it is the feature that the molding 3 is melted by the heating means, and after vitrification the surface to form a glass layer 3a, the processing gas 28 such as hydrogen, helium, or the mixed gas thereof, etc., is supplied to the molding 3 from the gas supply passage 26 and the gas supply opening 24. The supplied processing gas 28 flows upward through the inside of the molding 3 formed in the cavity 16 from the gas supply openings 24, and is exhausted to the outside of the heat-resisting mold 12 passing through the slit opening 20, the exhaust gas vent 30, and the exhaust gas passage 30 of the heat-resisting mold 12.

Accordingly, the molding 3 is gradually heat-melted by the heat from the heating means in the state of flowing the processing gas, is vitrified, and finally the whole part of the molding 3 becomes the translucent quartz glass layer, that is, the outer layer or the base body 3. In the state that all of the molding 3 becomes the translucent quartz glass layer, the supply of the processing gas from the gas supply opening 24 may be stopped.

As described above, by carrying out heat-melting of the molding 3 while supplying the processing gas to form the outer layer 3, the diameters of the bubbles existing in the outer layer 3 become small, whereby the content of the whole bubbles can be lowered. There is no particular restriction on the supplying speed of the processing gas 28 (gas flow rate), but the supplying speed is properly from about 10 to 50 liters/minute.

The apparatus shown in Fig. 1 is equipped with a supply bath 44 containing a silicon dioxide powder 42 on the heat-resisting mold 12. The supply bath 44 is connected to a delivery pipe 48 having formed a measuring feeder 46. A stirring blade 50 is disposed in the supply bath 44.

After forming the base body 3 or during the formation of the base body 3, while continuing heating by discharging from the carbon electrodes 36 and 38 of the arc discharging apparatus 40, by opening the measuring feeder 46 to a controlled divergence for supplying the silicon dioxide powder 42, the silicon dioxide powder 42 is supplied to the inside of the base body 3 from the delivery pipe 48. By the action of the arc discharging apparatus 40, a high-temperature gas atmosphere 54 has been formed in the base body 3. Accordingly, the silicon dioxide powder 42 is supplied into the high-temperature gas atmosphere 54.

In addition, the high-temperature gas atmosphere 54 means the atmosphere formed around the carbon electrodes 36 and 38 by the arc discharging apparatus using the carbon electrodes, and the temperature of the gas atmosphere becomes at least a sufficiently high temperature for melting the quartz glass, practically a high temperature of two thousands and several hundreds degree.

At least a part of the silicon dioxide powder 42 supplied in the high-temperature gas atmosphere 54 is melted by the heat in the high-temperature gas atmosphere 54, and at the same time is scattered toward the inner wall surface of the base body 3 and stuck to the inner wall surface of the base body 3 to form a substantially no-bubble quartz glass layer, that is, an inner layer 4 at the inner surface of the base body 3 welded in a body with the base body 3. The forming method of the inner layer 4 is described in detail in Japanese Patent Publication No. 22861/1992 described above.

**Fig. 2** shows the cross section of the quartz glass crucible 1 in the state of flowing upward the processing gas 28 (the H₂ gas in the illustrated embodiment) in the molding 3 in the method. The quartz glass crucible of the invention has the outer layer, that is, the base body 3 formed by heating a silicon dioxide powder, for example, a natural quarts powder by heating from the inner surface thereof and the inner layer 4 formed by releasing a silicon dioxide powder such as a synthetic silica powder in a high-temperature gas atmosphere 54, melt-scattering, and sticking to the inner wall surface of the base body 3.

### Examples

Then, the invention is explained by referring to examples but they are shown as illustrations and the invention is not limited to these examples.

### Example 1

Using the apparatus shown in Fig. 1, a quartz glass crucible having an outer diameter of 22 inches was produced. At the production, 20 kg of a natural quartz powder was previously supplied in the inside of a carbon mold equipped with an opening opened upward to form a molding, which became the outer layer.

The molding was heat-melted by the heat source from the inner surface and after vitrification the surface, a mixed gas of hydrogen and helium was introduced from the gas supply opening 24 at a ratio of 1 : 24 (2 liters/minutes of hydrogen and 48 liters/minute of helium and at a flow rate of 50 liters/minute) until finishing melting. The outer layer was formed as described above, and also 3 kg of a high-pure synthetic quartz glass powder was supplied into the high-temperature gas atmosphere formed inside of the outer layer and scattered and welded to the inside surface of the molding to produce a quarts glass crucible having an outer diameter of 22 inches.

In addition, since the synthetic quartz glass silica powder used in the case was very high-pure, when the contents of the metal elements thereof were measured, Al and Ti each was less than 0.5 ppm, Fe and Ca each was 0.1 ppm, Na, K, Li, and Mg each was less than 0.1 ppm, Zn was 10 ppb, Ni and Cr each was 5 ppb, Ba was 3 ppb, Cu and Pb each was 1 ppb, and other elements (Mn, Co, Ga, Sr, Y, Zr, Nb, Ag, Sn, Sb, Hf, Ta, U, and Th) were less than 1 ppb in all.

The bubble content (bubble volume/measured volume) of the outer layer of the quartz glass crucible thus produced was shown in Table 1 with the bubble content of the comparative example shown below being defined to be 1.

### Example 2

By following the same procedure as Example 1 except that a helium gas was used as the processing gas in place of the mixed gas of hydrogen and helium, a quartz glass crucible was produced. The bubble content of the outer layer of the quartz glass crucible produced was similarly as in Example 1 as it is shown in Table 1. In addition, it was confirmed that the same result was also obtained about the case of using a hydrogen gas as the processing gas.

### Comparative Example 1

By following the same procedure as Example 1 except that a processing gas was not introduced, a quarts glass crucible was produced. The bubble content of the outer layer of the quartz glass crucible produced was shown in Table 1 as defined to be 1 and was compared with those of Examples 1 and 2.

**Table 1**

| | Bubble content ratio of the outer layer |
|---|---|
| Example 1 | 0.35 |
| Example 2 | 0.40 |
| Comparative Example 1 | 1.0 |

### Effect of the Invention

As described above, according to the invention, by reducing the bubble diameter of the outer layer of the crucible, the effect that the bubble content can be effectively reduced is attained.

### List of Reference Numbers and Signs

- 3:: Outer layer (base body, molding)
- 3a:: Glass layer
- 4:: Inner layer
- 12:: Heat-resisting mold
- 12a:: Wall body
- 14:: Rotary shaft
- 16:: Cavity
- 18:: Opening
- 20:: Slit opening
- 22:: Lid
- 24:: Gas supply opening
- 26:: Gas supply passage
- 28:: Processing gas
- 30:: Gas exhaust vent
- 32:: Gas exhaust passage
- 34:: Power source
- 36: Carbon electrode
- 38:: Carbon electrode
- 40:: Arc discharging apparatus
- 42:: Silicon dioxide powder
- 44:: Supply bath
- 46:: Measuring feeder
- 48:: delivering pipe
- 50:: Stirring blade
- 54:: High-temperature gas atmosphere

## Claims

1. A method for producing a quartz glass crucible for pulling up a silicon single crystal having a layer structure comprising a translucent outer layer containing many bubbles and a transparent inner layer, the method comprises
(a) providing a heat-resisting mold having an opening opened upwardly
(b) a step of supplying a silicon dioxide powder to the inside of the mold to form a porous molding along the inner surface of the mold,
(c) a step of heat-melting of the molding to form the translucent outer layer of the quartz glass crucible, whereby an inside surface of the molding is vitrified by melting which forms an inside quartz glass layer, and
(d) a step of supplying a silicon dioxide powder into a high-temperature gas atmosphere inside the mold and scattering the silicon dioxide powder toward an inner wall surface in order to form the transparent inner layer welded to the translucent outer layer,
wherein
(e) during heat-melting of the molding a processing gas is supplied for flowing through the porous molding.

2. A method as claimed in Claim 1, wherein the processing gas contains less nitrogen than air or less oxygen than air.

3. A method as claimed in Claim 2, wherein the processing gas contains less oxygen than air and less nitrogen than air.

4. A method as claimed in one of the Claims 1 to 3, wherein the processing gas is supplied to the outside of the porous molding.

5. A method as claimed in one of the Claims 1 to 4, wherein the processing gas is hydrogen, helium or a mixture thereof.

6. An apparatus for producing a quartz glass crucible for pulling up a silicon single crystal, comprising of a horizontally rotatable heat-resisting mold equipped with an opening opened upward and a heating means for heating the inside of the heat-resisting mold, comprising at least one gas supply opening opened to the inside surface of the heat-resisting mold and a gas supply passage connected to the gas supply opening, and so constructed that after heat-melting a porous molding of a silicon dioxide powder formed along the inner surface of the heat-resisting mold and vitrifying the inside surface thereof to form a glass layer, a processing gas can be supplied to the inside of the molding through the gas supply passage and the gas supply opening.

7. Apparatus as claimed in Claim 6, wherein a plurality of gas supply openings are formed by perforating the inside of the wall body of the heat-resisting mold.

8. Apparatus as claimed in Claim 6 or 7, wherein at least one exhaust gas vent is provided which is connected to the inside surface of the heat-resisting mold.

9. Apparatus as claimed in Claim 8, wherein a plurality the exhaust gas vents are formed by perforating the inside of the wall body of the heat-resisting mold.
